# EUROPEAN PATENT APPLICATION

(11) **EP 4 357 136 A1**
(43) Date of publication of application: **24.04.2024**
(21) Application number: 22856299.7
(22) Date of filing: 12.08.2022
(51) Int. Cl.: B32B 37/00, B32B 27/08, B32B 27/30, B32B 7/023

(54) **METHOD FOR PRODUCING TRANSPARENT SHEET, AND TRANSPARENT SHEET**

(30) Priority: 13.08.2021 KR 20210107579
(71) Applicant: LG Chem, Ltd., Seoul 07336 (KR)
(72) Inventor: RYU, Jea Hoon, Daejeon 34122 (KR); KIM, Dae Young, Daejeon 34122 (KR)
(74) Representative: Plasseraud IP
(86) International application number: PCT/KR2022/012135
(87) International publication number: WO 2023/018306

(57) **Abstract**

The present invention relates to a method for manufacturing a transparent sheet, and more specifically, to a method for manufacturing a transparent sheet in which a first transparent resin that is a graft copolymer including a conjugated diene-based polymer and a second transparent resin that is a graft copolymer including an acrylic polymer are laminated as films, and a transparent sheet manufactured by the method.

## Description

### TECHNICAL FIELD

### Cross-reference to Related Applications

This application claims the benefit of the priority of Korean Patent Application No. 10-2021-0107579, filed on August 13, 2021, in the Korean Intellectual Property Office, the disclosure of which is incorporated herein in its entirety by reference.

### Technical Field

The present invention relates to a method for manufacturing a transparent sheet, and a transparent sheet.

### BACKGROUND ART

Transparent sheets used outdoors, such as canopy and soundproof walls require high weather resistance in order to maintain transparency and prevent discoloration. Therefore, transparent polycarbonate sheets or transparent sheets manufactured by co-extruding a resin having excellent weather resistance or a resin having excellent UV stability on a transparent resin are used as the outdoor transparent sheets.

However, when two or more resins are co-extruded, there is a limitation in that the manufacturing process is not only complex, but the loss of the raw material resin also becomes very large, and thus the economic feasibility is weak. There are limitations in that polycarbonate is vulnerable to scratches and abrasion, and thus scratches are likely to occur, the polycarbonate has weak chemical resistance, and thus is sensitive to organic solvents, and when it is exposed to sunlight for a long time, yellowing occurs.

### [PRIOR ART DOCUMENTS]

### [PATENT DOCUMENT]

(Patent Document 1) KR 10-2011-0011670 A

### DISCLOSURE OF THE INVENTION

### TECHNICAL PROBLEM

An object of the present invention for solving the above limitations is to secure weather resistance and chemical resistance without deterioration in the transparency of a transparent sheet while solving the complexity in the manufacturing process occurring during co-extrusion as well as minimizing the loss of the raw material resin.

That is, an aspect of the present invention provides a method for manufacturing a transparent sheet having secured weather resistance and chemical resistance without deterioration in the transparency thereof while solving the limitations of co-extrusion through lamination rather than co-extrusion.

Also, another aspect of the present invention provides a transparent sheet, which is manufactured by the method for manufacturing a transparent sheet, having secured weather resistance and chemical resistance without deterioration in the transparency thereof.

### TECHNICAL SOLUTION

According to an aspect of the present invention, there are provided a method for manufacturing a transparent sheet and a transparent sheet manufactured thereby.
(1) According to an aspect of the present invention, there is provided a method for manufacturing a transparent sheet, the method including the steps of: extruding a first transparent resin from a T-die (S10); transferring, to a compression roll, the T-die first transparent resin film extruded from the T-die (S20); when the T-die first transparent resin film is discharged from the T-die and is fed into the compression roll, feeding a second transparent resin film together into the compression roll while bonding the second transparent resin film onto at least one surface of the T-die first transparent resin film (S30); and laminating the T-die first transparent resin film and the second transparent resin film using the compression roll (S40), wherein the first transparent resin is a graft copolymer including a conjugated diene-based polymer, and the second transparent resin is a graft copolymer including an acrylic polymer.
(2) In (1) above of the present invention, there is provided the method for manufacturing a transparent sheet, wherein an extruder has a temperature of 190 °C to 210 °C during the extrusion in step (S10) above.
(3) In (1) or (2) above of the present invention, there is provided the method for manufacturing a transparent sheet, wherein in step (S30) above, the T-die first transparent resin film and the second transparent resin film are bonded while being fed into the compression roll.
(4) In any one of (1) to (3) above of the present invention, there is provided the method for manufacturing a transparent sheet, wherein in step (S30) above, the second transparent resin film is transferred to the compression roll while being unwound from a winding roll around which the second transparent resin film is wound.
(5) In any one of (1) to (4) above of the present invention, there is provided the method for manufacturing a transparent sheet, wherein in step (S30) above, when the T-die first transparent resin film is discharged from the T-die and is fed into the compression roll, the second transparent resin film is simultaneously bonded to both surfaces of the T-die first transparent resin film while being fed into the compression roll together.
(6) In any one of (1) to (5) above of the present invention, there is provided the method for manufacturing a transparent sheet, wherein during the lamination in step (S40) above, the temperature of the compression roll is 40 °C to 70 °C.
(7) In any one of (1) to (6) above of the present invention, there is provided the method for manufacturing a transparent sheet, wherein the first transparent resin is a graft copolymer including a conjugated diene-based polymer, an aromatic vinyl-based monomer unit, and a vinyl cyan-based monomer unit.
(8) In any one of (1) to (7) above of the present invention, there is provided the method for manufacturing a transparent sheet, wherein the second transparent resin is a graft copolymer including an acrylic polymer, an aromatic vinyl-based monomer unit, and a vinyl cyan-based monomer unit.
(9) In any one of (1) to (8) above of the present invention, there is provided the method for manufacturing a transparent sheet, wherein the second transparent resin has a haze of 10% or less with respect to a specimen having a thickness of 3.2 mm.
(10) In any one of (1) to (9) above of the present invention, there is provided the method for manufacturing a transparent sheet, wherein the second transparent resin has a transmittance (Tt) of 70% or more with respect to a specimen having a thickness of 3.2 mm.
(11) In any one of (1) to (10) above of the present invention, there is provided the method for manufacturing a transparent sheet, wherein the second transparent resin has a haze of 8% or less with respect to a sheet having a thickness of 0.3 mm or a sheet having a thickness of 0.05 mm.
(12) In any one of (1) to (11) above of the present invention, there is provided the method for manufacturing a transparent sheet, wherein the second transparent resin has a transmittance (Tt) of 80% or more with respect to a sheet having a thickness of 0.3 mm or a sheet having a thickness of 0.05 mm.
(13) In any one of (1) to (12) above of the present invention, there is provided the method for manufacturing a transparent sheet, wherein the first transparent resin and the second transparent resin have the same refractive index.
(14) According to an aspect of the present invention, there is provided a transparent sheet including: a T-die first transparent resin film layer; and a second transparent resin film layer laminated on at least one surface of the T-die first transparent resin film layer, wherein a first transparent resin is a graft copolymer including a conjugated diene-based polymer, a second transparent resin is a graft copolymer including an acrylic polymer, and the T-die first transparent resin film layer and the second transparent resin film layer each have a uniform thickness in the TD direction of the transparent sheet.
(15) In (14) above of the present invention, there is provided the transparent sheet wherein with respect to the total thickness of the transparent sheet, the thickness of the T-die first transparent resin film layer is 85% to 99% by thickness, and the thickness of the second transparent resin film layer is 1% to 15% by thickness.

### ADVANTAGEOUS EFFECTS

When a transparent sheet is manufactured using the method for manufacturing a transparent sheet according to the present invention, not only the complexity in the manufacturing process occurring during co-extrusion can be solved, but the loss of the raw material resin can also be minimized, and further weather resistance and chemical resistance can be secured without deterioration in the transparency of the transparent sheet.

### BRIEF DESCRIPTION OF THE DRAWINGS

FIG. 1 is a process flowchart illustrating a manufacturing process of a method for manufacturing a transparent sheet according to an embodiment of the present invention.
FIG. 2 is a process flowchart illustrating a manufacturing process of a method for manufacturing a transparent sheet according to another embodiment of the present invention.
FIG. 3 is a schematic view illustrating a cross-section of a transparent sheet manufactured according to a co-extrusion method and a cross-section of a transparent sheet according to an embodiment of the present invention.
FIG. 4 is a photograph taken of the transparent sheets manufactured in Example 1 and Comparative Example 1 of the present invention.
FIG. 5 is a photograph taken of the transparent sheets manufactured in Example 2 and Comparative Example 2 of the present invention.
FIG. 6 is a photograph taken of chemical resistance test results with respect to the transparent sheets manufactured in Example 1 and Comparative Example 1 of the present invention.
FIGS. 7 and 8 are photographs taken of chemical resistance test results with respect to the transparent sheets manufactured in Example 2, Comparative Example 2, and Reference Examples 1 and 2 of the present invention.
FIG. 9 is a photograph taken of weather resistance test results with respect to the transparent sheets manufactured in Example 1 and Comparative Example 1 of the present invention.
FIG. 10 is a photograph taken of weather resistance test results with respect to the transparent sheets manufactured in Example 2, Comparative Example 2 and Reference Example 1 of the present invention.
Each of FIGS. 11 and 12 is a photograph taken of heat and cold resistance test results with respect to the transparent sheets manufactured in Example 1 and Comparative Example 1 of the present invention.
FIG. 13 is a photograph taken of heat and cold resistance test results with respect to the transparent sheets manufactured in Example 2 and Comparative Example 2 of the present invention.

### MODE FOR CARRYING OUT THE INVENTION

Hereinafter, the present invention will be described in more detail to aid in understanding the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The present invention provides a method for manufacturing a transparent sheet.

According to an embodiment of the present invention, the method for manufacturing a transparent sheet may include the steps of: extruding a first transparent resin from a T-die (S10); transferring, to a compression roll, the T-die first transparent resin film extruded from the T-die (S20); when the T-die first transparent resin film is discharged from the T-die and is fed into the compression roll, feeding a second transparent resin film together into the compression roll while bonding the second transparent resin film onto at least one surface of the T-die first transparent resin film (S30); and laminating the T-die first transparent resin film and the second transparent resin film using the compression roll (S40), wherein a first transparent resin may be a graft copolymer including a conjugated diene-based polymer, and a second transparent resin may be a graft copolymer including an acrylic polymer.

As used herein, the terms "film" and "sheet" are each resin molded articles having a predetermined thickness and showing a planar shape, and may be used in the same meaning, but specifically, when the thickness is relatively thin, or before lamination, the resin molded article may be referred to as a film, and when the thickness is relatively thick, or after lamination, the resin molded article may be referred to as a sheet.

According to an embodiment of the present invention, the method for manufacturing a transparent sheet may be a method for manufacturing the transparent sheet by laminating the first transparent resin and the second transparent resin in the form of a film without co-extruding the first transparent resin and the second transparent resin.

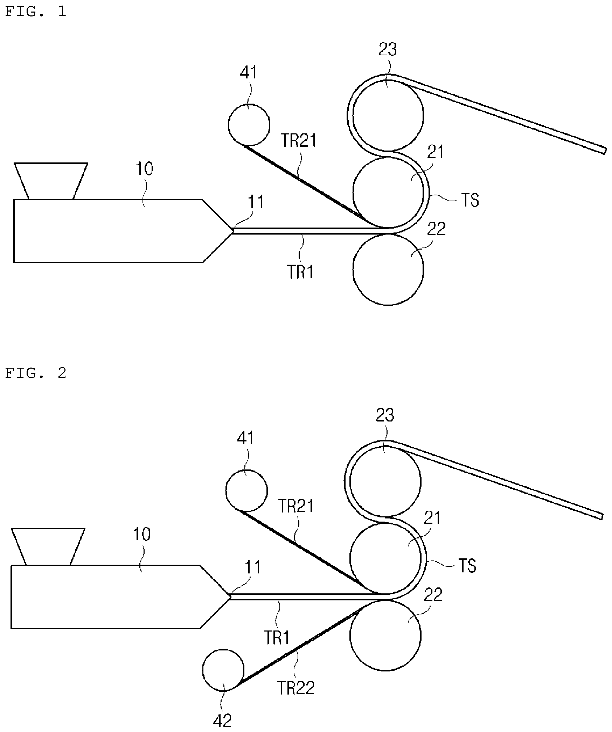

According to an embodiment of the present invention, step (S10) above may be a step of performing T-die extrusion to manufacture the first transparent resin in the shape of a film in order to manufacture a transparent sheet using the first transparent resin. As a specific example, referring to FIGS. 1 and 2, a first transparent resin supplied to the hopper of an extruder 10 may be discharged from a T-die 11 provided in the extruder 10 to manufacture a T-die first transparent resin film TR1 in the shape of a T-die film. In this case, step (S10) above may be continuously performed, and accordingly, the T-die first transparent resin film TR1 may be continuously discharged from the T-die 11 provided in the extruder 10.

According to an embodiment of the present invention, during the extrusion in step (S10) above, the extruder may have a temperature of 190 °C to 210 °C, and within this range, the surface temperature of the T-die first transparent resin film TR1 discharged from the T-die 11 may be maintained enough to be laminated with second transparent resin films TR21 and TR22 described subsequently, thereby inducing the lamination of the T-die first transparent resin film TR1 with the second transparent resin films TR21 and TR22 without the heating of a compression roll.

According to an embodiment of the present invention, since co-extrusion is not necessarily required for the method for manufacturing a transparent sheet, both a single-layer extruder and a multi-layer extruder may be applied as the extruder 10.

According to an embodiment of the present invention, step (S20) above is a step of transferring the T-die first transparent resin film TR1 extruded from the T-die 11 to compression rolls 21 and 22 according to step (S10) above, and may be performed such that the T-die first transparent resin film TR1 may be directly fed into the compression rolls 21 and 22 without passing through a separate calender roll for smoothing before being fed into the compression rolls 21 and 22. That is, step (S20) above is characterized by being performed such that the T-die first transparent resin film TR1 discharged from the T-die 11 provided in the extruder 10 is directly fed into the compression rolls 21 and 22. As described above, when the T-die first transparent resin film TR1 discharged from the T-die 11 provided in the extruder 10 is directly fed into the compression rolls 21 and 22, a separate calender roll is not required, thereby simplifying the process and minimizing the change in the surface temperature of the T-die first transparent resin film TR1, which may induce the lamination with the second transparent resin films TR21 and TR22.

According to an embodiment of the present invention, step (S20) above may be continuously performed following step S10 above, and accordingly, from step (S10), the T-die first transparent resin film TR1 may be continuously discharged from the T-die 11 provided in the extruder 10 and at the same time, may be continuously transferred to the compression rolls 21 and 22.

According to an embodiment of the present disclosure, step (S30) above may be a step of bonding the T-die first transparent resin film TR1 and the second transparent resin films TR21 and TR22 before the T-die first transparent resin film TR1 and the second transparent resin films TR21 and TR22 are fed to the compression rolls 21 and 22 such that the T-die first transparent resin film TR1 and the second transparent resin films TR21 and TR22 may be laminated on the compression rolls 21 and 22. That is, when the T-die first transparent resin film TR1 is discharged from the T-die 11 and fed into the compression rolls 21 and 22 through steps S10 and S20 above, step (S30) above may be performed while the second transparent resin films TR21 and TR22 are bonded to at least one surface of the T-die first transparent resin film TR1 and fed into the compression rolls 21 and 22 together. In this case, the bonding refers to inducing one surface of the second transparent resin films TR21 and TR22 to contact on at least one surface of the T-die first transparent resin film TR1, and the lamination is not performed by the bonding itself, and the T-die first transparent resin film TR1 and the second transparent resin films TR21 and TR22 may have a shape in which films are simply stacked by the bonding. As a specific example, the T-die first transparent resin film TR1 and the second transparent resin films TR21 and TR22 may be bonded while being fed into the compression rolls 21 and 22.

According to an embodiment of the present invention, step (S30) above may be continuously performed following steps (S10) and (S20) above, and accordingly, from step (S10), the T-die first transparent resin film TR1 may be continuously discharged from the T-die 11 provided in the extruder 10 and at the same time, may be continuously transferred and fed into the compression rolls 21 and 22, wherein the second transparent resin films TR21 and TR22 may be continuously bonded to at least one surface of the T-die first transparent resin film TR1 and may be fed into the compression rolls 21 and 22 together. Accordingly, in step (S30) above, the second transparent resin films TR21 and TR22 may be transferred to the compression rolls 21 and 22 while being unwound from winding rolls 41 and 42 around which the second transparent resin films TR21 and TR22 are wound.

According to an embodiment of the present invention, in step (S30) above, when the T-die first transparent resin film TR1 is discharged from the T-die 11 and fed into the compression rolls 21 and 22, the second transparent resin films TR21 and TR22 may be simultaneously bonded to both surfaces of the T-die first transparent resin film TR1 while being fed into the compression rolls 21 and 22 together. In this case, it is possible to laminate the second transparent resin films TR21 and TR22 on both surfaces of the T-die first transparent resin film TR1.

According to an embodiment of the present invention, step (S40) above is a step of laminating the T-die first transparent resin film TR1 and the second transparent resin film TR21 and TR22, which are fed from step (S30) above in a state of being bonded to each other into the compression rolls 21 and 22, and the T-die first transparent resin film TR1 and the second transparent resin film TR21 and TR22 may be laminated while passing through the compression rolls 21 and 22 to form a transparent sheet TS.

According to an embodiment of the present disclosure, the transparent sheet TS formed through the compression rolls 21 and 22 may include: a T-die first transparent resin film layer; and a second transparent resin film layer stacked on at least one surface of the T-die first transparent resin film layer.

According to an embodiment of the present invention, during the lamination in step (S40) above, the compression rolls 21 and 22 may have a temperatures of 40 °C to 70 °C or 40 °C to 60 °C.

According to an embodiment of the present invention, the compression rolls 21 and 22 may be a pair of calender rolls. That is, the T-die first transparent resin film TR1 and the second transparent resin films TR21 and TR22 bonded to at least one surface thereof, which are transferred to the compression rolls 21 and 22, may be fed through between a pair of compression rolls 21 and 22, which are a pair of calender rolls. The pair of compression rolls 21 and 22 rotate about a rotational axis, wherein the T-die first transparent resin film TR1 and the second transparent resin films TR21 and TR22 bonded to at least one surface thereof, which are fed through between the pair of compression rolls 21 and 22, may be laminated due to compression caused by the pair of compression rolls 21 and 22, and thus, the transparent sheet TS may be manufactured while passing through the pair of compression rolls 21 and 22. In addition, the transparent sheet TS having passed through the pair of compression rolls 21 and 22 may be fed and pass through between any one compression roll 21 of the pair of compression rolls and the compression roll 23 connected thereto, and may further pass through the additional calender rolls as necessary, and the positions of the plurality of compression rolls 21, 22, and 23 may be adjusted to positions enough for laminating the T-die first transparent resin film TR1 and the second transparent resin films TR21 and TR22 bonded to at least one surface thereof. In addition, each of the compression rolls may include a tension roll, and in this case, the smoothness of the transparent sheet TS may be improved. The diameter and length of the compression rolls 21, 22, and 23 may be adjusted according to the length of the T-die 11 provided in the extruder 10, the width and thickness of the transparent sheet TS to be manufactured, and the like, and may have the same diameter and length as each other.

According to an embodiment of the present invention, step (S40) above may be continuously performed following steps (S10) to (S30) above, and thus, the transparent sheet TS having passed through the compression rolls 21, 22, and 23 may be wound around a separate winding roll (not shown) to be continuously obtained.

As described above, according to an embodiment of the present invention, the method for manufacturing a transparent sheet may be performed according to not a simple roll-to-roll process but a similar roll-to-roll process in which the T-die first transparent resin film TR1 is discharged and transferred according to steps (S10) and (S20) above to be directly fed into the compression rolls 21 and 22, wherein the second transparent resin films TR21 and TR22 are fed together into the compression rolls 21 and 22 according to step (S30) above, and the T-die first transparent resin film TR1 and the second transparent resin films TR21 and TR22 bonded to at least one surface thereof are laminated while passing through the compression rolls 21 and 22 to manufacture the transparent sheet TS according to step (S40) above and wind the manufactured transparent sheet TS using the winding roll.

According to an embodiment of the present invention, it is important to perform the method for manufacturing a transparent sheet according to steps (S10) to (S40) above, but it is also important to select the first transparent resin constituting the T-die first transparent resin film TR1 and the second transparent resin constituting the second transparent resin film in order to manufacture the transparent sheet TS without performing co-extrusion and without separately heating the compression roll when the T-die first transparent resin film TR1 and the second transparent resin films TR21 and TR22 bonded to at least one surface thereof are laminated, as in steps (S10) to (S40) above, while securing weather resistance and chemical resistance without deterioration in the transparency of the transparent sheet.

As mentioned in the background art of the invention, transparent sheets used outdoors, such as canopy and soundproof walls, require high weather resistance in order to maintain transparency and prevent discoloration. As a transparent resin to be applied to such outdoor transparent sheets, a polycarbonate resin, a polymethyl methacrylate resin, a glycol-modified polyethylene terephthalate resin, or a transparent ABS resin may be taken into account. However, among them, the polymethyl methacrylate resin having excellent weather resistance has a limitation of weak impact resistance and chemical resistance, the polycarbonate resin has a limitation of weak scratch resistance and weather resistance, the glycol-modified polyethylene terephthalate resin has a limitation of weak weather resistance and heat resistance, and the transparent ABS resin has outstanding impact resistance, transparency, heat resistance, and scratch resistance, but has a limitation of very weak weather resistance and chemical resistance. Accordingly, the present invention is characterized in that the second transparent resin is introduced in order to secure the weather resistance and chemical resistance of the transparent resin.

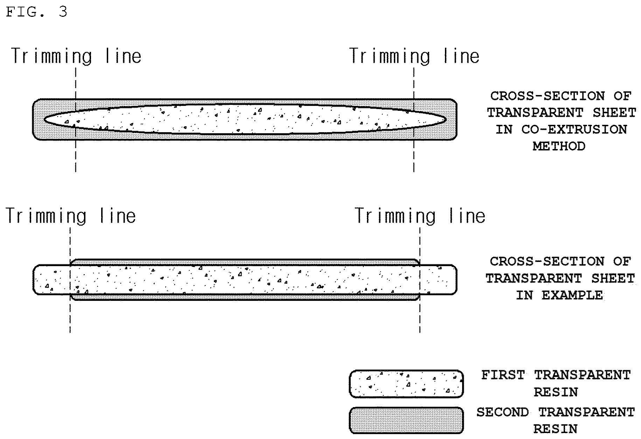

However, referring to FIG. 3, when the second transparent resin is simply introduced by co-extrusion with the first transparent resin, the transparent sheet is inevitably manufactured as a form in which the second transparent resin surrounds the first transparent resin, and in this case, when looking at the cross-section of the transparent sheet, each of the T-die first transparent resin film layer and the second transparent resin film layer unavoidably has non-uniform thickness in the TD direction of the transparent sheet. Such thickness unevenness eventually causes an increase in the haze of the transparent sheet, and also causes warpage deformation depending on temperatures. In addition, since the thickness of the second transparent resin film layer is inevitably increased, the thickness unevenness causes deterioration in the impact characteristics of the transparent sheet itself.

On the other hand, referring to FIG. 3, when the transparent sheet is manufactured according to the method for manufacturing a transparent sheet of the present invention, the second transparent resin films TR21 and TR22 are laminated on at least one surface of the T-die first transparent resin film TR1, and thus the transparent sheet is manufactured in a form in which the second transparent resin film layer is stacked on the T-die first transparent resin film layer, and in this case, when looking at the cross-section of the transparent sheet, each of the T-die first transparent resin film layer and the second transparent resin film layer has uniform thicknesses in the TD direction of the transparent sheet. Accordingly, in the case of the transparent sheet manufactured according to the method for manufacturing a transparent sheet of the present invention, only a portion of the T-die first transparent resin film layer, in which the second transparent resin film layer is not laminated, may be set as trimming lines when performing a trimming process of cutting unnecessary portions from the manufactured transparent sheet. In this case, the trimmed portion of the T-die first transparent resin film layer may all be recycled as the first transparent resin. Furthermore, the resins of the T-die first transparent resin film layer and the second transparent resin film layer can be induced to have the same refractive index, preferably, as described below, the refractive indices are the same, and the monomer components for each resin are similar, so that even if the transparent sheet itself including both the T-die first transparent resin film layer and the second transparent resin film is recycled, the transparency and haze are not affected. In addition, since the thicknesses of the T-die first transparent resin film layer and the second transparent resin film layer are uniform, the haze of the transparent sheet is not affected, less warpage deformation occurs depending on temperatures, and the second transparent resin film layer can be formed thin, thereby having excellent transparency and color developability of the T-die first transparent resin film layer, and sufficiently securing impact properties of the transparent sheet itself.

In this case, the second transparent resin according to an embodiment of the present invention for achieving the advantage of the second transparent resin film layer may be a graft copolymer including an acrylic polymer. Meanwhile, in introducing the graft copolymer including the acrylic polymer, which is the second transparent resin, in the method for manufacturing a transparent sheet according to the present invention, transparent resins, which may be taken into account as the first transparent resin, include a polycarbonate resin, a polymethyl methacrylate resin, a glycol-modified polyethylene terephthalate resin, and a transparent ABS resin, and the polycarbonate resin and the glycol-modified polyethylene terephthalate resin are not suitable for bonding and laminating the graft copolymer including the acrylic polymer which is the second transparent resin because the extrusion processing temperature is a high temperature, 270 °C to 300 °C when the T-die film is manufactured using the extruder 10. In addition, the crystalline polymer is not suitable because peeling may occur after laminated with the second transparent resin film. In consideration of these points, the first transparent resin according to the present invention is preferably a graft copolymer including a conjugated diene-based polymer such as a transparent ABS resin, in consideration of refractive index adjustment, recycling possibility, and compatibility with the second transparent resin.

That is, in consideration of all of the above points, the first transparent resin for being applied to the method for manufacturing a transparent sheet of the present invention may be a graft copolymer including a conjugated diene-based polymer, the second transparent resin may be a graft copolymer including an acrylic polymer, and the method for manufacturing a transparent sheet according to the present invention can be applied only if the first transparent resin and the second transparent resin are satisfied.

According to an embodiment of the present invention, the first transparent resin may be a graft copolymer including a conjugated diene-based polymer, an aromatic vinyl-based monomer unit, and a vinyl cyan-based monomer unit. As a specific example, the first transparent resin may be a graft copolymer formed by graft-polymerizing an aromatic vinyl-based monomer unit and a vinyl cyan-based monomer unit to a conjugated diene-based polymer.

According to an embodiment of the present invention, the conjugated diene-based polymer may include a conjugated diene-based monomer unit, and the conjugated diene-based monomer for forming the conjugated diene-based monomer unit may be at least one selected from the group consisting of 1,3-butadiene, 2,3-dimethyl-1,3-butadiene, piperylene, 3-butyl-1,3-octadiene, isoprene, and 2-phenyl-1,3-butadiene, and more specifically, may be 1,3-butadiene. In addition, the conjugated diene-based polymer may further include an aromatic vinyl-based monomer unit as necessary.

According to an embodiment of the present invention, the aromatic vinyl-based monomer for forming the aromatic vinyl-based monomer unit of the first transparent resin may be at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and specifically, may be styrene.

According to an embodiment of the present invention, the vinyl cyan-based monomer for forming the vinyl cyan-based monomer unit of the first transparent resin may be at least one selected from the group consisting of acrylonitrile, methacrylonitrile, ethacrylonitrile, phenylacrylonitrile, and α-chloroacrylonitrile, and specifically, may be acrylonitrile.

According to an embodiment of the present invention, the first transparent resin may further include an alkyl (meth)acrylate-based monomer unit in order to provide transparency, and the alkyl (meth)acrylate-based monomer for forming the alkyl (meth)acrylate-based monomer unit may be an alkyl (meth) acrylate-based monomer having 1 to 12 carbon atoms, and specifically, may be at least one selected from the group consisting of methyl methacrylate, ethyl methacrylate, propyl methacrylate, n-butyl methacrylate, methyl acrylate, ethyl acrylate, propyl acrylate, and n-butyl acrylate.

According to an embodiment of the present invention, the amount of each of the conjugated diene-based polymer, the aromatic vinyl-based monomer unit, the vinyl cyan-based monomer unit, and the alkyl (meth)acrylate-based monomer unit of the first transparent resin may be appropriately adjusted in order to secure the transparency of the first transparent resin prepared from the graft copolymer.

According to an embodiment of the present invention, with respect to a specimen having a thickness of 1/8" measured according to ASTM D638, the first transparent resin may have a tensile strength of 100 kgf/cm² or more, 200 kgf/cm² or more, 300 kgf/cm² or more, or 350 kgf/cm² or more, and may also have a tensile strength of 800 kgf/cm² or less, 700 kgf/cm² or less, 600 kgf/cm² or less, 500 kgf/cm² or less, or 450 kgf/cm² or less.

According to an embodiment of the present invention, with respect to the specimen having a thickness of 1/8" measured according to ASTM D790, the first transparent resin may have a flexural strength of 200 kgf/cm² or more, 300 kgf/cm² or more, 400 kgf/cm² or more, 500 kgf/cm² or more, or 600 kgf/cm² or more, and may also have a flexural strength of 1,000 kgf/cm² or less, 900 kgf/cm² or less, 800 kgf/cm² or less, 700 kgf/cm² or less, or 650 kgf/cm² or less.

According to an embodiment of the present invention, with respect to the specimen having a thickness of 1/8" measured according to ASTM D790, the first transparent resin may have a flexural modulus of 10,000 kgf/cm² or more, 12,000 kgf/cm² or more, 15,000 kgf/cm² or more, 16,000 kgf/cm² or more, or 17,000 kgf/cm² or more, and may also have a flexural modulus of 50,000 kgf/cm² or less, 40,000 kgf/cm² or less, 30,000 kgf/cm² or less, 25,000 kgf/cm² or less, or 20,000 kgf/cm² or less.

According to an embodiment of the present invention, with respect to a specimen having a thickness of 1/4" measured according to ASTM D256, the first transparent resin may have a notched izod impact strength at 23 °C of 1 kgfcm/cm or more, 2 kgfcm/cm or more, 3 kgfcm/cm or more, 4 kgfcm/cm or more, or 5 kgfcm/cm or more, and may also have a notched izod impact strength of 20 kgfcm/cm or less, 15 kgfcm/cm or less, 10 kgfcm/cm or less, 9 kgfcm/cm or less, 8 kgfcm/cm or less, or 7 kgfcm/cm or less.

According to an embodiment of the present invention, with respect to a specimen having a thickness of 6.4 mm measured according to ASTM D648 (18.6 kgf/cm²), the first transparent resin may have a heat deformation temperature of 50 °C or more, 60 °C or more, 70 °C or more, or 75 °C or more, and may also have a heat deformation temperature of 100 °C or less, 90 °C or less, or 85 °C or less.

According to an embodiment of the present invention, the first transparent resin may have a melting index measured at a load of 10 kgf at 220 °C according to ASTM D1238 of 1 g/10 min or more, or 2 g/10 min or more, and may also have a melting index of 10 g/10 min or less, 8 g/10 min or less, 6 g/10 min or less, or 4 g/10 min or less.

According to an embodiment of the present invention, the second transparent resin may be a graft copolymer including an acrylic polymer, an aromatic vinyl-based monomer unit, and a vinyl cyan-based monomer unit. As a specific example, the second transparent resin may be a graft copolymer formed by graft-polymerizing an aromatic vinyl-based monomer unit and a vinyl cyan-based monomer unit to an acrylic polymer. In this regard, in the related art, the transparency of a graft copolymer including an acrylic polymer, an aromatic vinyl-based monomer unit, and a vinyl cyan-based monomer unit, corresponding to the second transparent resin, that is, an ASA resin, has not been achieved. However, in the present invention, the purpose of the present invention may be achieved by using, as the second transparent resin, the graft copolymer including a novel acrylic polymer having transparency, and using the conventional opaque ASA resin cannot achieve the purpose of the present invention because the transparency of the transparent sheet cannot be secured as in the present invention.

According to an embodiment of the present invention, the acrylic polymer may include an acrylic monomer unit, the acrylic monomer for forming the acrylic monomer unit may be an alkyl (meth)acrylate-based monomer, specifically, an alkyl (meth)acrylate-based monomer having 1 to 12 carbon atoms, and more specifically, may be at least one selected from the group consisting of methyl methacrylate, ethyl methacrylate, propyl methacrylate, n-butyl methacrylate, methyl acrylate, ethyl acrylate, propyl acrylate, and n-butyl acrylate.

According to an embodiment of the present invention, the aromatic vinyl-based monomer for forming the aromatic vinyl-based monomer unit of the second transparent resin may be at least one selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, and 1-vinyl-5-hexylnaphthalene, and specifically, may be styrene.

According to an embodiment of the present invention, the vinyl cyan-based monomer for forming the vinyl cyan-based monomer unit of the second transparent resin may be at least one selected from the group consisting of acrylonitrile, methacrylonitrile, ethacrylonitrile, phenylacrylonitrile, and α-chloroacrylonitrile, and specifically, may be acrylonitrile.

According to an embodiment of the present invention, the amount of each of the acrylic polymer, the aromatic vinyl-based monomer unit, and the vinyl cyan-based monomer unit of the second transparent resin may be appropriately adjusted in order to secure the transparency of the second transparent resin prepared from the graft copolymer.

According to an embodiment of the present invention, with respect to the specimen having a 1/8" thickness measured according to ASTM D638, the second transparent resin may have a tensile strength of 100 kgf/cm² or more, 150 kgf/cm² or more, or 250 kgf/cm² or more, and may also have a tensile strength of 800 kgf/cm² or less, 500 kgf/cm² or less, or 350 kgf/cm² or less.

According to an embodiment of the present invention, with respect to the specimen having a thickness of 1/8" measured according to ASTM D638, the second transparent resin may have an elongation of 50% or more, 55% or more, 600 or more, 650 or more, 700 or more, or 75% or more, and may have an elongation of 100% or less, 95% or less, 90% or less, or 85% or less.

According to an embodiment of the present invention, with respect to the specimen having a thickness of 1/8" measured according to ASTM D790, the second transparent resin may have a flexural strength of 100 kgf/cm² or more, 300 kgf/cm² or more or 400 kgf/cm² or more, and may also have a flexural strength of 800 kgf/cm² or less, 600 kgf/cm² or less, or 500 kgf/cm² or less.

According to an embodiment of the present invention, with respect to the specimen having a thickness of 1/8" measured according to ASTM D790, the second transparent resin may have a flexural modulus of 5,000 kgf/cm² or more, 8,000 kgf/cm² or more, 10,000 kgf/cm² or more, or 11,000 kgf/cm² or more, and may also have a flexural modulus of 30,000 kgf/cm² or less, 20,000 kgf/cm² or less, or 15,000 kgf/cm² or less.

According to an embodiment of the present invention, with respect to the specimen having a thickness of 1/4" measured according to ASTM D256, the second transparent resin may have a notched izod impact strength at 23 °C of 1 kgfcm/cm or more, 2 kgfcm/cm or more, 3 kgfcm/cm or more, 4 kgfcm/cm or more, 5 kgfcm/cm or more, or 6 kgfcm/cm or more, and may also have a notched izod impact strength of 20 kgfcm/cm or less, 15 kgfcm/cm or less, 10 kgfcm/cm or less, 9 kgfcm/cm or less, or 8 kgfcm/cm or less.

According to an embodiment of the present invention, with respect to the specimen having a thickness of 6.4 mm measured according to ASTM D648 (18.6 kgf/cm²), the second transparent resin may have a heat deformation temperature of 50 °C or more, 60 °C or more, or 65 °C or more, and may also have a heat deformation temperature of 100 °C or less, 90 °C or less, or 80 °C or less.

According to an embodiment of the present invention, the second transparent resin may have a melting index measured at a load of 10 kgf at 220 °C according to ASTM D1238 of 1 g/10 min or more, 2 g/10 min or more, or 3 g/10 min or more, and may also have a melting index of 10 g/10 min or less, 8 g/10 min or less, 6 g/10 min or less, or 5 g/10 min or less.

According to an embodiment of the present invention, with respect to a specimen having a thickness of 3.2 mm measured according to ASTM D785, the second transparent resin may have a Rockwell hardness of 50 or more, 55 or more, 60 or more, 65 or more, 70 or more, or 75 or more, and may have a Rockwell hardness of 100 or less, 95 or less, 90 or less, or 85 or less.

According to an embodiment of the present invention, with respect to a specimen having a thickness of 3.2 mm, the second transparent resin may have a haze of 10% or less, 9% or less, 8% or less, 7% or less, 6% or less, 5% or less, or 4% or less, and may have a haze of 0.1% or more, 0.50 or more, or 1% or more.

According to an embodiment of the present invention, with respect to a sheet having a thickness of 0.3 mm, the second transparent resin may have a haze of 8% or less, 7% or less, 6% or less, 5% or less, 4% or less, 3% or less, or 2.5% or less, and may have a haze of 0.1% or more, 0.50 or more, or 1% or more.

According to an embodiment of the present invention, with respect to a sheet having a thickness of 0.05 mm, the second transparent resin may have a haze of 5% or less, 4% or less, 3% or less, 2.5% or less, or 2% or less, and may have a haze of 0.1% or more, 0.50 or more, or 1% or more.

According to an embodiment of the present invention, with respect to the specimen having a thickness of 3.2 mm, the second transparent resin may have a transmittance (Tt) of 70% or more, 75% or more, or 80% or more, and may have a transmittance (Tt) of 100% or less, 95% or less, 90% or less, or 85% or less.

According to an embodiment of the present invention, with respect to the sheet having a thickness of 0.3 mm, the second transparent resin may have a transmittance (Tt) of 80% or more, 85% or more, or 90% or more, and may have a transmittance (Tt) of 100% or less, 95% or less, 93% or less, or 92% or less.

According to an embodiment of the present invention, with respect to the sheet having a thickness of 0.05 mm, the second transparent resin may have a transmittance (Tt) of 80% or more, 85% or more, or 90% or more, and may have a transmittance (Tt) of 100% or less, 95% or less, 93% or less, or 92% or less.

According to an embodiment of the present invention, the first transparent resin and the second transparent resin may have the same refractive index. Accordingly, even when the second transparent resin film is laminated on the T-die first transparent resin film, the transparency of the transparent sheet can be maintained and an increase in the haze can be minimized. Here, the same refractive index means that the refractive index difference between the first transparent resin and the second transparent resin is ±0.1 or less, ±0.01 or less, ±0.001 or less,±0.0001 or less, or ±0.00001 or less, or there is no difference therebetween.

According to an embodiment of the present invention, if resins satisfying the physical properties are used as the first transparent resin and the second transparent resin, respectively, weather resistance and chemical resistance may be further improved without deterioration in the transparency of the transparent sheet when the transparent sheet is manufactured according to the present invention.

The present invention provides a transparent sheet.

According to an embodiment of the present invention, the transparent sheet may be manufactured according to the method for manufacturing a transparent sheet as described above. As a specific example, the transparent sheet may include: a T-die first transparent resin film layer; and a second transparent resin film layer laminated on at least one surface of the T-die first transparent resin film layer, wherein a first transparent resin is a graft copolymer including a conjugated diene-based polymer, a second transparent resin is a graft copolymer including an acrylic polymer, and the T-die first transparent resin film layer and the second transparent resin film layer each have a uniform thickness in the TD direction of the transparent sheet.

According to an embodiment of the present invention, the first transparent resin and the second transparent resin may be the same as those described in the method for manufacturing a transparent sheet.

According to an embodiment of the present invention, since the thickness of each of the T-die first transparent resin film layer and the second transparent resin film layer is uniform in the TD direction of the transparent sheet, the haze of the transparent sheet is not affected, less warpage deformation occurs depending on temperatures, and the second transparent resin film layer can be formed thin, thereby having excellent transparency and color developability of the T-die first transparent resin film layer, and sufficiently securing impact properties of the transparent sheet itself. Here, the uniform thickness means that the thickness difference between the thickest portion and the thinnest portion in each of the T-die first transparent resin film layer and the second transparent resin film layer in the TD direction of the transparent sheet is ±0.05 mm or less, ±0.01 mm or less, ±0.005 mm or less, ±0.001 mm or less, or there is no difference therebetween.

According to an embodiment of the present invention, with respect to the total thickness of the transparent sheet, the thickness of the T-die first transparent resin film layer may be 85% or more, 900 or more, or 95% or more, and 99% or less by thickness, and the thickness of the second transparent resin film layer may be 1% or more, 15% or less, 10% or less, or 5% or less by thickness, and within this range, the impact resistance, heat resistance, and scratch resistance of the transparent sheet may not only be secured from the T-die first transparent resin film layer, but the weather resistance and chemical resistance may also be secured from the second transparent resin film layer without deteriorating the physical properties of the T-die first transparent resin film layer.

According to an embodiment of the present invention, the thickness of the T-die first transparent resin film layer may be 1 mm or more, 2 mm or more, 3 mm or more, or 4 mm or more, and may be 10 mm or less, 8 mm or less, 7 mm or less, or 6 mm or less, the thickness of the second transparent resin film layer may be 0.01 mm or more, 0.05 mm or more, or 0.10 mm or more, and may be 0.50 mm or less, 0.30 mm or less, or 0.15 mm or less, and within this range, the impact resistance, heat resistance, and scratch resistance of the transparent sheet may not only be secured from the T-die first transparent resin film layer, but the weather resistance and chemical resistance may also be secured from the second transparent resin film layer without deteriorating the physical properties of the T-die first transparent resin film layer.

According to an embodiment of the present invention, with respect to a specimen having a thickness of 3.2 mm measured according to ASTM D1003, the transparent sheet may have a total light transmittance of 80% or more, 81% or more, or 81.5% or more, and may also have a total light transmittance of 90% or less, 88% or less, 85% or less, or 82% or less.

According to an embodiment of the present invention, with respect to the specimen having a thickness of 3.2 mm measured according to ASTM D1003, the transparent sheet may have a diffusion transmittance of 1% or more, 2% or more, 3% or more, or 4% or more, and may also have a diffusion transmittance of 10% or less, 8% or less, 6% or less, or 5% or less.

According to an embodiment of the present invention, with respect to the specimen having a thickness of 3.2 mm measured according to ASTM D1003, the transparent sheet may have a haze of 1% or more, 2% or more, 3% or more, or 5% or more, and may also have a haze of 10% or less, 8% or less, 7% or less, or 6% or less.

According to an embodiment of the present invention, with respect to a specimen having a thickness of 3.2 mm measured according to ASTM D2457, the transparent sheet may have a gloss at 60°of 100 or more, 110 or more, or 120 or more, and may have a gloss of 150 or less, 140 or less, 130 or less, or 125 or less.

Hereinafter, examples of the present invention will be described in detail so that a person with ordinary skill in the art to which the present invention pertains can easily carry out the present invention. The present invention may, however, be embodied in many different forms and should not be construed as being limited to the examples set forth herein.

### Examples

### Example 1

LG Chem's product name TR562-23316 (transparent ABS resin) was used as the first transparent resin, and LG Chem's product name LI901-INP (transparent ASA resin) was used as the second transparent resin.

First transparent resin pellets were put into the hopper of the extruder 10 provided with the T-die 11, and extruded at an extruder temperature of 210 °C to discharge the T-die first transparent resin film TR1 having a thickness of 3 mm from the T-die 11. While the T-die first transparent resin film TR1 discharged from the T-die 11 is directly transferred to the compression rolls 21 and 22, the second transparent resin film TR21 having a thickness of 0.1 mm wound around a separate winding roll 41 is bonded to one surface of the T-die first transparent resin film TR1 and simultaneously fed through between the compression rolls 21 and 22. While passing through the compression rolls 21 and 22, the T-die first transparent resin film TR1 and the second transparent resin film TR21 are laminated to each other, the transparent sheet TS is passed through between the compression rolls 21 and 23, and then wound using a separate winding roll to manufacture the transparent sheet TS. In this case, the temperature of the compression rolls 21 and 22 was 60 °C.

### Example 2

LG Chem's product name TR562-NP (transparent ABS resin) was used as the first transparent resin, and LG Chem's product name LI901-INP (transparent ASA resin) was used as the second transparent resin.

First transparent resin pellets were put into the hopper of the extruder 10 provided with the T-die 11, and extruded at an extruder temperature of 210 °C to discharge the T-die first transparent resin film TR1 having a thickness of 3 mm from the T-die 11. While the T-die first transparent resin film TR1 discharged from the T-die 11 is directly transferred to the compression rolls 21 and 22, the second transparent resin films TR21 and TR22 having a thickness of 0.1 mm wound around separate winding rolls 41 and 42 are bonded to both surfaces of the T-die first transparent resin film TR1 and simultaneously fed through between the compression rolls 21 and 22. While passing through the compression rolls 21 and 22, the T-die first transparent resin film TR1 and the second transparent resin films TR21 and TR22 are laminated to each other, the transparent sheet TS is passed through between the compression rolls 21 and 23, and then wound using separate winding rolls to manufacture the transparent sheet TS. In this case, the temperature of the compression rolls 21 and 22 was 60 °C.

### Comparative Example 1

The T-die first transparent resin film TR1 was manufactured as a transparent sheet without laminating the second transparent resin film TR21 to the T-die first transparent resin film TR1 in Example 1.

### Comparative Example 2

The T-die first transparent resin film TR1 was manufactured as a transparent sheet without laminating the second transparent resin films TR21 and TR22 to the T-die first transparent resin film TR1 in Example 2.

### Reference Example 1

A commercially available polycarbonate resin was manufactured as a transparent sheet.

### Reference Example 2

A commercially available polymethylmethacrylate resin was manufactured as a transparent sheet.

### Experimental Example 1: Evaluation of Optical Properties of Transparent Sheet

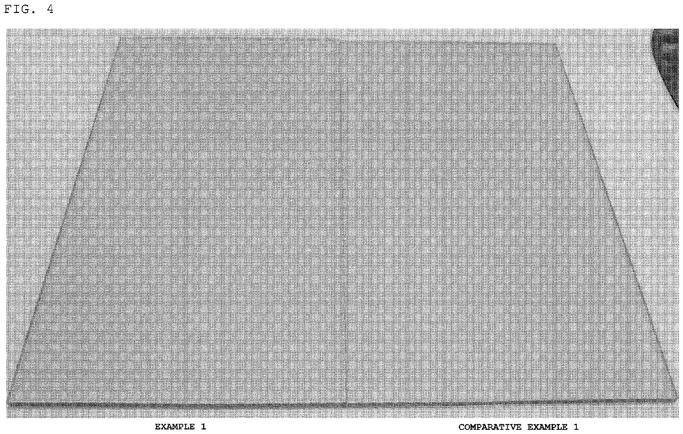

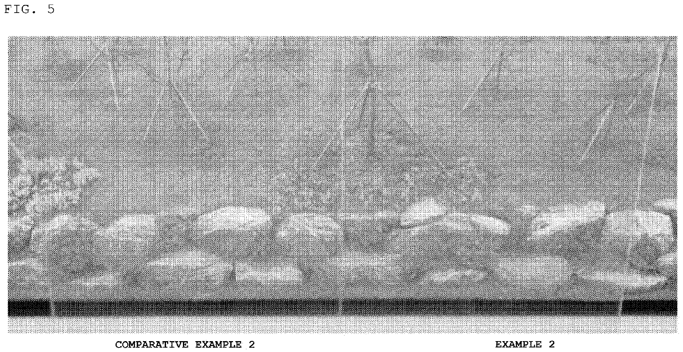

Color coordinates, total light transmittance, diffusion transmittance, haze, and gloss were measured by the following method using the transparent sheets manufactured in Examples 1 and 2, and Comparative Examples 1 and 2, and the results are listed in Table 1 below. In addition, the transparent sheets manufactured in Example 1 and Comparative Example 1 were photographed and shown in FIG. 4, and the transparent sheets manufactured in Example 2 and Comparative Example 2 were photographed and shown in FIG. 5.
* Color coordinates: Color coordinates of the CIE LAB color space were measured using a colorimeter.
* Total light transmittance (Tt, %), diffusion transmittance (Td, %), and haze (Haze, %): Total light transmittance, diffusion transmittance, and haze for transparent sheet specimens having an area of 40 mm X 80 mm and a thickness of 3.2 mm were measured using HM-150N (MURAKAMI COLOR LAB Co., Ltd.) according to ASTM D1003.
* Gloss: Gloss at 60° with respect to the transparent sheet specimens having an area of 40 mm X of 80 mm and a thickness of 3.2 mm were measured using Rhopoint IQ (Rhopoint Instruments Co., Ltd.) according to ASTM D2457.

**[Table 1]**

| Division | | Example 1 | Example 2 | Comparative Example 1 | Comparative Example 2 |
|---|---|---|---|---|---|
| Color coordinate | L | 92.11 | 95.11 | 92.48 | 95.89 |
| | a | -5.91 | -0.67 | -6.29 | -0.54 |
| | b | 23.3 | 2.42 | 24.02 | 1.19 |
| Tt | (%) | 81.84 | 89.88 | 82.65 | 89.55 |
| Td | (%) | 4.54 | 1.32 | 5.25 | 1.83 |
| Haze | (%) | 5.55 | 1.50 | 6.35 | 2.04 |
| 60° gloss | | 121.4 | 134.6 | 115.2 | 114.2 |

As shown in Table 1, although the transparent sheet in Example 1 had the second transparent resin film laminated on one surface thereof as compared with the transparent sheet in Comparative Example 1, it was confirmed that the color coordinates and the transparency were hardly changed, and thus the gloss was rather increased while the transparency was maintained.

In addition, although the transparent sheet in Example 2 had the second transparent resin films laminated on both surfaces thereof as compared in the transparent sheet in Comparative Example 2, it was confirmed that the color coordinates and the transparency were hardly changed, and thus the gloss was rather increased while the transparency was maintained.

### Experimental Example 2: Evaluation of Chemical Resistance of Transparent Sheet

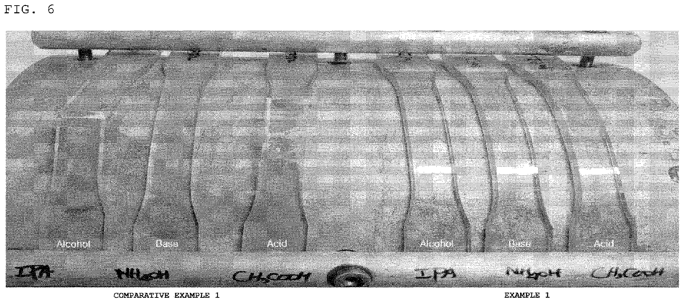

Chemical resistance was measured by the following method using the transparent sheets manufactured in Examples 1 and 2, Comparative Examples 1 and 2, and Reference Examples 1 and 2, and the results are shown in Table 2 and FIGS. 6 to 8.
* Chemical resistance: According to ASTM D5419, dog bone-shaped transparent sheet specimens having a thickness of 3.2 mm were fixed to a jig, and then isopropyl alcohol, ammonia water, and acetic acid were each applied thereto, and after 1 week, whether cracks were generated and the time taken to generate cracks were observed.

**[Table 2]**

| Division | | Exampl e 1 | Exampl e 2 | Compar ative Exampl e 1 | Compar ative Exampl e 2 | Refere nce Exampl e 1 | Refer ence Examp le 2 |
|---|---|---|---|---|---|---|---|
| Solv ent type | Isopro pyl alcoho l | No cracks | No cracks | Cracks (10 min) | Cracks (10 min) | No cracks | Crack s (15 sec) |
| | Ammoni a water | No cracks | No cracks | No cracks | No cracks | No cracks | No crack s |
| | Acetic acid | No cracks | No cracks | Cracks (10 sec) | Cracks (10 sec) | Tiny cracks | No crack s |
| | Silico ne | - | No cracks | - | No cracks | No cracks | No crack s |

As shown in Table 2 and FIG. 6, it was confirmed that the transparent sheet in Example 1 did not generate cracks with respect to all of alcohol, base, and acid, and thus the chemical resistance was remarkably improved as compared with the transparent sheet in Comparative Example 1 in which cracks were generated in alcohol and acid.

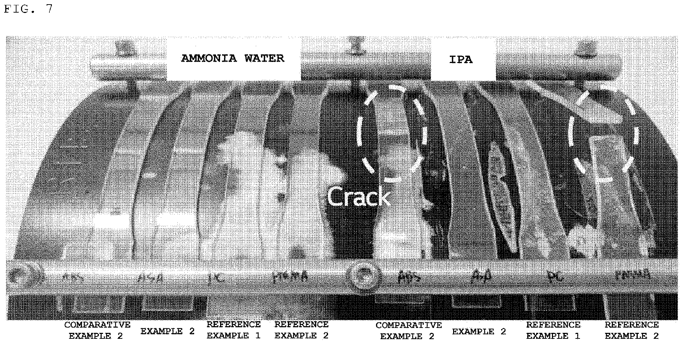

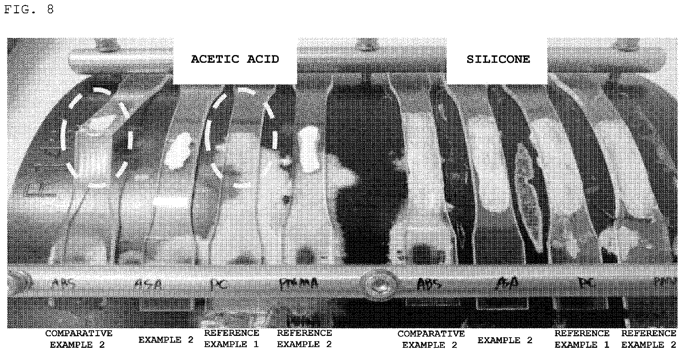

In addition, as shown in Table 2, FIGS. 7 and 8, it was confirmed that the transparent sheet in Example 2 did not generate cracks with respect to all of alcohol, base, acid, and silicone, and thus the chemical resistance was remarkably improved as compared with the transparent sheets in Comparative Example 2 in which cracks were generated in alcohol and acid, Reference Example 1 in which tiny cracks were generated in acid, and Reference Example 2 in which cracks were generated in alcohol.

### Experimental Example 3: Evaluation of Weather Resistance of Transparent Sheet

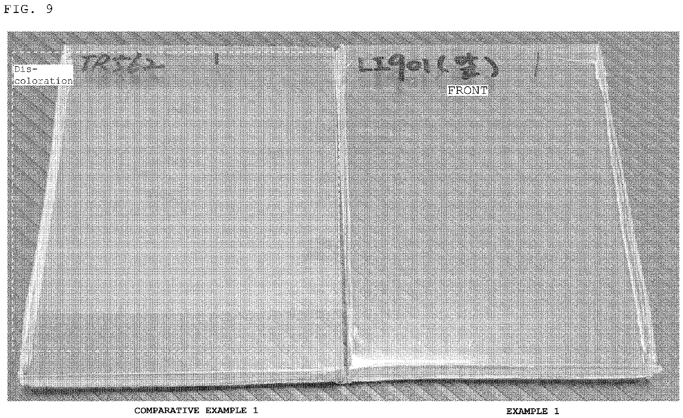

The transparent sheets manufactured in Example 1 and Comparative Example 1 were exposed to an accumulated light amount of 299.52 MJ (about 95 days of Xenon-Arc) using MV3000 Metal Halide (SUGA Co.) according to SAE J2527, and discoloration was observed. As a result, as shown in FIG. 9, it was confirmed that the transparent sheet in Example 1 did not undergo discoloration, while the transparent sheet in Comparative Example 1 underwent discoloration.

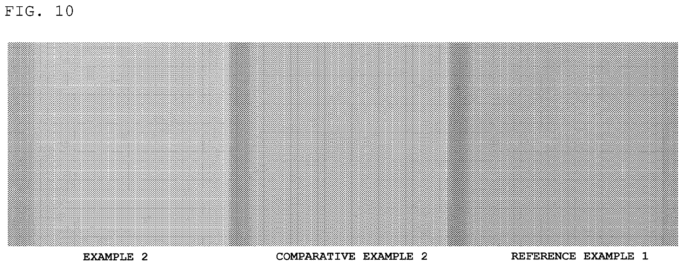

In addition, the transparent sheets manufactured in Example 2, Comparative Example 2 and Reference Example 1 were exposed to an accumulated light amount of 252 MJ (about 84 days of Xenon-Arc) using MV3000 Metal Halide (SUGA Co.) according to ASTM G155-1, and discoloration was observed. As a result, as shown in FIG. 10, it was confirmed that the transparent sheet in Example 2 did not undergo discoloration, while the transparent sheets in Comparative Example 2 and Reference 1 underwent discoloration.

### Experimental Example 4: Evaluation of Heat and Cold Resistance of Transparent Sheet 1

Using the transparent sheets manufactured in Example 1 and Comparative Example 1, dog bone-shaped transparent sheet specimens having a thickness of 3.2 mm were fixed to a jig, placed in a heat and cold resistance cycle chamber, and repeated three cycles by setting one cycle at -20 °C for 2 hours and at 80 °C and a relative humidity of 85% for 2 hours, and then presence of peeling, transparency, and haze change were observed.

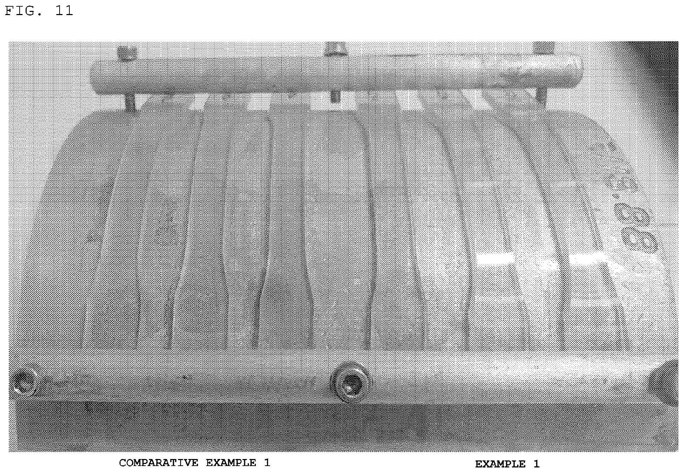

As shown in FIG. 11, it was confirmed that peeling did not occur between the T-die first transparent resin film layer and the second transparent resin film layer even when the specimens were exposed to the above-described heat and cold cycle conditions, and the transparency and haze were not deteriorated.

### Experimental Example 5: Evaluation of Heat and Cold Resistance of Transparent Sheet 2

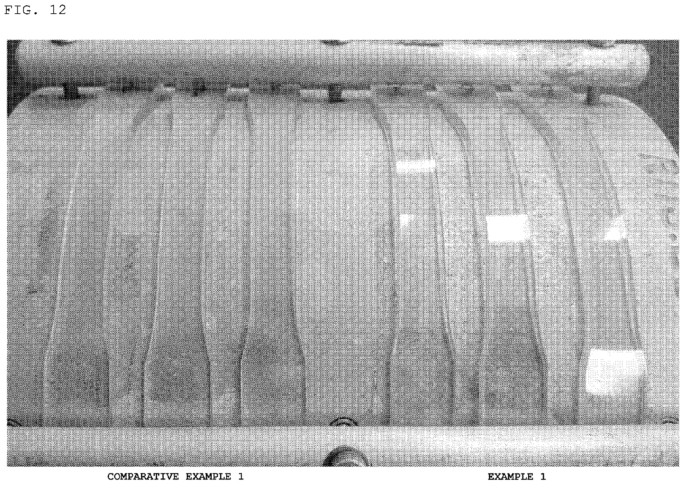

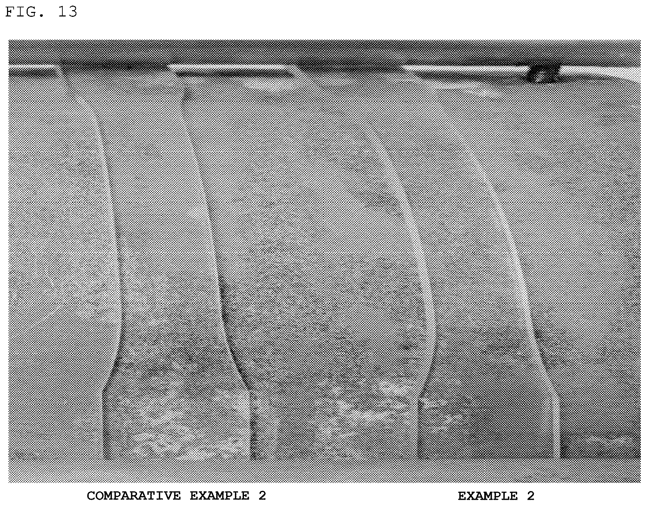

Using the transparent sheets manufactured in Examples 1 and 2, and Comparative Examples 1 and 2, dog bone-shaped transparent sheet specimens having a thickness of 3.2 mm were fixed to a jig, placed in a heat and cold resistance cycle chamber, and repeated three cycles by setting one cycle at a surface temperature of 80 °C for 3 hours, at an ambient temperature of -40 °C for 3 hours, and at an ambient temperature of 50 °C and a relative humidity of 90% for 7 hours, and then presence of peeling, transparency, and haze change were observed, and the results are shown in Table 3, and FIGS. 12 and 13 below.

**[Table 3]**

| Division | | Example 1 | Example 2 | Comparative Example 1 | Comparative Example 2 |
|---|---|---|---|---|---|
| Tt | (%) | 81.43 | 85.60 | 81.73 | 87.57 |
| Td | (%) | 6.08 | 5.15 | 6.40 | 5.08 |
| Haze | (%) | 7.47 | 6.02 | 7.83 | 5.80 |

As shown in FIGS. 12 and 13, it was confirmed that peeling did not occur between the T-die first transparent resin film layer and the second transparent resin film layer in the transparent sheets in Examples 1 and 2 even when the transparent sheets were exposed to the above-described heat and cold resistance cycle conditions.

In addition, as shown in Table 3, it was confirmed that deterioration in the transparency and haze of the transparent sheet in Example 1 was minimized as compared with that of the transparent sheet in Comparative Example 1, and it was confirmed that the transparent sheet in Example 2 maintained the same level of transparency and haze as those of the transparent sheet of Comparative Example 2.

From the above-described results, it was confirmed that when the transparent sheet is manufactured using the method for manufacturing a transparent sheet according to the present invention, not only can the complexity in the manufacturing process occurring during co-extrusion be solved, but the loss of the raw material resin can also be minimized, and further weather resistance and chemical resistance can be secured without deterioration in the transparency of the transparent sheet.

## Claims

1. A method for manufacturing a transparent sheet, the method comprising the steps of:
extruding a first transparent resin from a T-die (S10);
transferring, to a compression roll, the T-die first transparent resin film extruded from the T-die (S20);
feeding a second transparent resin film together into the compression roll while bonding the second transparent resin film onto at least one surface of the T-die first transparent resin film when the T-die first transparent resin film is discharged from the T-die and is fed into the compression roll(S30); and
laminating the T-die first transparent resin film and the second transparent resin film using the compression roll (S40),
wherein the first transparent resin is a graft copolymer comprising a conjugated diene-based polymer, and the second transparent resin is a graft copolymer comprising an acrylic polymer.

2. The method of claim 1, wherein an extruder has a temperature of 190 °C to 210 °C during the extrusion in the step (S10).

3. The method of claim 1, wherein in the step (S30), the T-die first transparent resin film and the second transparent resin film are bonded while being fed into the compression roll.

4. The method of claim 1, wherein in the step (S30), the second transparent resin film is transferred to the compression roll while being unwound from a winding roll around which the second transparent resin film is wound.

5. The method of claim 1, wherein in the step (S30), when the T-die first transparent resin film is discharged from the T-die and is fed into the compression roll, the second transparent resin film is simultaneously bonded to both surfaces of the T-die first transparent resin film while being fed into the compression roll together.

6. The method of claim 1, wherein during the lamination in the step (S40), the temperature of the compression roll is 40 °C to 70 °C.

7. The method of claim 1, wherein the first transparent resin is a graft copolymer including a conjugated diene-based polymer, an aromatic vinyl-based monomer unit, and a vinyl cyan-based monomer unit.

8. The method of claim 1, wherein the second transparent resin is a graft copolymer including an acrylic polymer, an aromatic vinyl-based monomer unit, and a vinyl cyan-based monomer unit.

9. The method of claim 1, wherein the second transparent resin has a haze of 10% or less with respect to a specimen having a thickness of 3.2 mm.

10. The method of claim 1, wherein the second transparent resin has a transmittance (Tt) of 70% or more with respect to a specimen having a thickness of 3.2 mm.

11. The method of claim 1, wherein the second transparent resin has a haze of 8% or less with respect to a sheet having a thickness of 0.3 mm or a sheet having a thickness of 0.05 mm.

12. The method of claim 1, wherein the second transparent resin has a transmittance (Tt) of 80% or more with respect to a sheet having a thickness of 0.3 mm or a sheet having a thickness of 0.05 mm.

13. The method of claim 1, wherein the first transparent resin and the second transparent resin have the same refractive index.

14. A transparent sheet comprising:
a T-die first transparent resin film layer; and
a second transparent resin film layer laminated on at least one surface of the T-die first transparent resin film layer,
wherein the first transparent resin is a graft copolymer including a conjugated diene-based polymer,
wherein the second transparent resin is a graft copolymer including an acrylic polymer, and
wherein the T-die first transparent resin film layer and the second transparent resin film layer each have a uniform thickness in the TD direction of the transparent sheet.

15. The transparent sheet of claim 14, wherein with respect to the total thickness of the transparent sheet, the thickness of the T-die first transparent resin film layer is 85% to 99% by thickness, and the thickness of the second transparent resin film layer is 1% to 15% by thickness.
